# FASCICULE DE BREVET EUROPEEN

(11) **EP 0 985 567 B1**
(45) Date de publication et mention de la délivrance du brevet: **25.02.2004**
(21) Numéro de dépôt: 99460054.2
(22) Date de dépôt: 08.09.1999
(51) Int. Cl.: B60J 1/20

(54) **Store à enrouleur à boîtier formant partie supérieure d'une portière, portière et procédé de mise en place correspondants**
Rollo mit Gehäuse zur Bildung eines Türoberteiles; Tür und Verfahren dafür
Roller blind with enclosure forming the upper part of a door; corresponding door and method to install

(30) Priorité: 09.09.1998 FR 9811395
(43) Date de publication de la demande: 15.03.2000
(73) Titulaire: WAGON AUTOMOTIVE SNC, 79300 Bressuire (FR)
(72) Inventeur: Jeuffray, Jean-Marie, 79300 Bressuire (FR)
(74) Mandataire: Vidon, Patrice

(56) Documents cités:
- DE-C- 3 617 427
- DE-C- 3 905 503
- US-A- 5 089 912

## Description

Le domaine de l'invention est celui des stores d'occultation pour portière de véhicule, selon le préambule de la revendication n°1. Plus précisément, l'invention concerne les stores rétractables, notamment à enrouleur, que l'utilisateur peut déployer, par exemple pour se protéger du soleil. Ces caractéristiques sont révélées par exemple dans le document DE 3 617 427 C.

Classiquement, les portières de véhicule présentent un panneau de porte, sur lequel est monté une vitre, par exemple fixe ou coulissante. Le panneau de porte comprend généralement une partie tôlée sur sa face extérieure correspondant à la carrosserie du véhicule, et une garniture de porte sur sa face intérieure (appelée également par la suite, par simplification, panneau intérieur).

L'intérieur du panneau peut comprendre différents éléments, généralement en tôle, de renfort et d'accrochage des différents éléments. Il comprend également, en cas de besoin, le système, mécanique ou électrique, de commande du coulissement de la vitre.

On notera ici que le terme "portière" englobe les deux ou quatre portières d'un véhicule, mais également, par extension, les parties de carrosserie fixe portant une vitre (cas des vitres arrière d'un véhicule à deux portes ou d'un véhicule utilitaire, ou de la vitre arrière d'un véhicule) et les autres parties mobiles, telles que les hayons ou les toits ouvrants. On utilise par la suite le terme " portière" pour des raisons de simplicité mais il est clair que l'invention s'applique à tout type d'ouverture ménagée dans un véhicule.

Dans le cas le plus courant d'une vitre coulissante, cette dernière, qui ferme la baie aménagée dans la portière, peut pénétrer à l'intérieur du panneau au travers d'une fente prévue à cet effet. En général, cette fente est délimitée par deux joints lécheurs extérieur et intérieur, destinés à assurer l'étanchéité et le nettoyage de la vitre.

On connait depuis longtemps des stores rétractables permettant l'occultation partielle ou pratiquement totale de la baie de telles portières. Souvent, le store est monté sur un rouleau d'enroulement, logé à l'intérieur d'un boîtier que l'on vient fixer, d'une manière quelconque, sur la partie supérieure de la garniture intérieure de la portière.

Cette technique, illustrée par exemple par le document de brevet FR-98 02859 (FR-2 779 474), présente plusieurs inconvénients.

Tout d'abord, le boîtier présente un encombrement relativement important qui diminue le champ de vision offert par la baie.

Un autre inconvénient de ces stores est qu'ils sont peu esthétiques (couleurs et matériaux différents de ceux de la garniture, fixations apparentes, présence d'un jour entre le dessous du boîtier et le dessus de la garniture de porte, ...).

Afin de pallier ce dernier inconvénient, il a été proposé de recouvrir de tels stores d'un élément de garniture rapporté sur la garniture intérieure existante de la portière. Cette technique est clairement préférable sur le plan de l'esthétique. En revanche, elle n'apporte pas de réponse au problème de l'encombrement.

Une autre technique connue est de monter le store à l'intérieur du panneau de porte. Selon cette technique, une ouverture spécifique est prévue sur la partie supérieure du panneau de porte, pour permettre le passage du rideau, ce qui nécessite une construction spécifique du panneau de porte. Un exemple de cette technique est illustré par le document de brevet FR-9802151 (FR-2 774 947).

En conséquence, le montage d'un store doit être effectué lors de la fabrication de la portière (le store est mis en place, puis la portière est assemblée). Il n'est donc pas possible d'installer le store plus tard, de façon optionnelle. De même, il est très difficile d'intervenir sur le store, pour une opération de maintenance ou de réparation.

Un autre inconvénient de cette technique est l'absence d'étanchéité entre l'extérieur et l'intérieur du panneau de la portière, du fait de l'ouverture prévue pour le passage du store.

L'invention a notamment pour objectif de pallier ces différents inconvénients de l'état de l'art.

Plus précisément, un objectif de l'invention est de fournir un store pour véhicule, qui puisse être mis en place de façon simple, après fabrication et montage de la portière, tout en étant parfaitement intégré à cette portière. Bien sûr, le store de l'invention doit également pouvoir être mis en place lors de la réalisation de la portière.

L'invention a également pour objectif de fournir un tel store, ne modifiant pas, ou peu, le volume extérieur de la portière, et qui présente de bonnes qualités ergonomiques et esthétiques, notamment par rapport à l'habillage de la portière.

Ainsi, un objectif de l'invention est de fournir un tel store, qui permette de conserver une homogénéité du panneau, sur le plan visuel et sur le plan du confort.

Un autre objectif de l'invention est de fournir un tel store, qui garantisse une bonne étanchéité, notamment à la poussière, entre l'intérieur du panneau de la portière et l'intérieur du véhicule.

Encore un autre objectif de l'invention est de fournir un tel store, qui soit aisément accessible, pour des opérations de maintenance.

L'invention a également pour objectif de fournir une portière de véhicule équipée d'un tel store, dont les qualités de rigidité sont améliorées, de façon simple. Un objectif complémentaire de l'invention est de fournir une telle portière, dans laquelle le store puisse être installé de façon optionnelle, et qui soit compatible avec d'autres équipements d'origine et/ou également optionnels.

Ces objectifs, ainsi que d'autres qui apparaîtront par la suite, sont atteints selon l'invention à l'aide d'un store destiné à occulter une baie ménagée dans un élément de carrosserie d'un véhicule, du type présentant un boîtier dans lequel est monté un rideau rétractable, ledit boîtier étant conçu de façon qu'il présente des éléments extérieurs visibles prévus pour venir en lieu et place d'une partie supérieure du panneau intérieur dudit élément de carrosserie, ladite partie supérieure ayant été préalablement supprimée.

Ainsi, le montage du store est particulièrement aisé. L'encombrement n'est pas modifié, le store venant se loger à l'intérieur du panneau. On obtient donc un store parfaitement intégré, bien que pouvant être monté de façon optionnelle, éventuellement après la construction du véhicule.

L'aspect extérieur de l'élément de carrosserie ainsi équipé (tel qu'une portière arrière du véhicule) peut être pratiquement conservé. Notamment, lesdits éléments extérieurs visibles peuvent avantageusement être revêtus, au moins partiellement, d'un revêtement harmonisé avec ledit panneau intérieur et/ou l'intérieur dudit véhicule.

Selon l'invention, le store comprend en outre des premiers moyens de fixation à l'extrémité découpée dudit panneau intérieur, et des seconds moyens de fixation à l'extrémité supérieure d'une feuillure interne audit panneau.

La mise en place est alors très facile. Par ailleurs, cette technique permet de renforcer la rigidité de la partie supérieure de l'élément de carrosserie considéré.

Selon un mode de réalisation particulièrement simple de l'invention lesdits premiers moyens de fixation sont formés par un prolongement dudit boîtier, venant chevaucher ladite extrémité découpée. Bien sûr, d'autres techniques peuvent être utilisées, en complément ou en remplacement (collage, soudage, utilisation d'une pièce de fixation,...).

De façon avantageuse, le store de l'invention porte un joint lécheur, dont au moins une extrémité de léchage est en contact avec une vitre coulissante. Le montage de cet élément est ainsi automatique, et simultané à celui du boîtier du store. Il permet, outre sa fonction habituelle de nettoyage, de garantir l'étanchéité entre le boîtier et la face intérieure de la vitre.

Dans ce cas, ledit joint lécheur forme avantageusement lesdits seconds moyens de fixation. Notamment, ledit joint lécheur peut comprendre une première agrafe coopérant avec une clé de maintien solidaire dudit boîtier et une seconde agrafe formant lesdits seconds moyens de fixation.

A nouveau, cela permet une installation efficace et très simple.

Selon un autre mode de réalisation, le joint lécheur n'est pas fourni avec le store, mais est mis en place indépendamment. Dans ce cas, le store de l'invention comprend avantageusement des moyens de solidarisation à un joint lécheur préalablement monté sur ledit élément de carrosserie.

Bien sûr, la fixation peut également être effectuée indépendamment du joint lécheur, par exemple directement sur une feuillure ou tout élément adéquat solidaire de la carrosserie.

Toujours dans le même objectif d'installation aisée, ledit boîtier est formé, selon un mode de réalisation préférentiel de l'invention, de deux parties longitudinales, solidarisées par une articulation prévue à cet effet.

Cette articulation est avantageusement étanche, au moins à l'air, pour garantir l'étanchéité à la poussière pour l'intérieur du panneau.

De façon avantageuse, ledit store peut porter au moins un des équipements appartenant au groupe suivant :
- commande d'ouverture et de fermeture de la vitre de ladite baie ;
- commande électrique d'un dispositif ou d'un élément optionnel ;
- coussin gonflable de sécurité ("airbag").

Divers types de rideaux rétractables peuvent être mis en oeuvre selon cette technique, tel que des stores pliants, ou coulissants. Selon un mode de réalisation préférentiel de l'invention, leidt rideau rétractable est monté sur un rouleau d'enroulement, pour former un store à enrouleur.

L'invention concerne également un élément de carrosserie d'un véhicule, comprenant un panneau et une baie, dont la partie supérieure dudit panneau a été supprimée et remplacée par des éléments extérieurs visibles du boîtier d'un store, présentant également un logement pour le rideau rétractable dudit store, et prévu pour prendre place à l'intérieur dudit panneau, une fente prévue au niveau desdits éléments extérieurs visibles permettant le passage dudit rideau rétractable, ledit boîtier comprenant des premiers moyens de fixation à l'extrémité supérieure découpée dudit panneau intérieur, et des seconds moyens de fixation à l'extrémité supérieure d'une feuillure interne audit panneau.

Il peut notamment s'agir, de façon non restrictive d'une portière de véhicule, et en particulier d'une portière arrière.

L'invention concerne également un procédé de mise en place d'un store à rideau rétractable sur un élément de carrosserie d'un véhicule, comprenant un panneau et une baie. Ce procédé comprend notamment les étapes suivantes :
- suppression de la partie supérieure dudit panneau ;
- installation dudit store au niveau de ladite partie supérieure supprimée, par montage de premiers moyens de fixation à l'extrémité découpée dudit panneau intérieur, et de seconds moyens de fixation à l'extrémité supérieure d'un feuillure interne audit panneau.
le boîtier dudit store présentant des éléments extérieurs visibles prévus pour venir en lieu et place de ladite partie supérieure supprimée, et un logement pour ledit rideau rétractable, prévu pour prendre place à l'intérieur dudit panneau,
une fente prévue au niveau desdits éléments extérieurs visibles permettant le passage dudit rideau rétractable.

D'autres caractéristiques et avantages apparaîtront plus clairement à la lecture de la description suivante d'un mode de réalisation préférentiel, donné à titre de simple exemple illustratif et non limitatif, et des dessins annexés, parmi lesquels :
- la figure 1 est une vue en coupe d'un store à enrouleur selon l'invention, monté sur une portière ;
- les figures 2A et 2B illustrent la partie supérieure d'une portière selon l'invention, en cours de montage (figure 2A) et montée (figure 2B) ;
- la figure 3 présente un store à enrouleur selon l'invention, équipé d'éléments optionnels.

Ainsi qu'on l'a déjà indiqué, le store de l'invention est conçu de façon à remplacer la partie supérieure du panneau de porte intérieur d'une portière, qui a été préalablement supprimée.

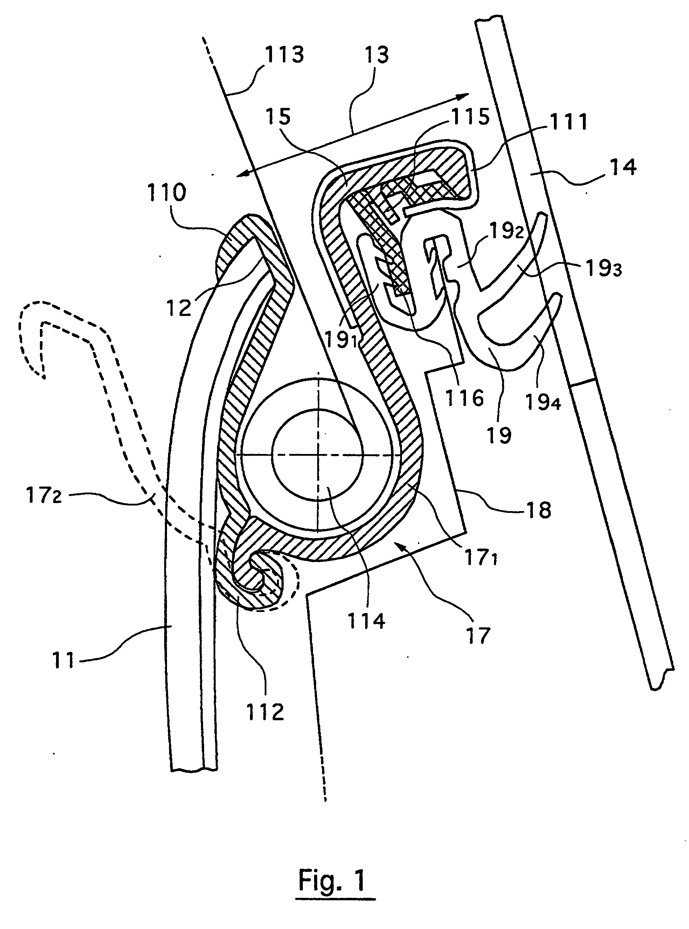

La figure 1 illustre, en coupe, un mode de réalisation avantageux d'un tel store, monté sur une portière de véhicule.

Le panneau intérieur 11 de cette portière a été découpé 12, de façon à libérer l'emplacement symbolisé par la double flèche 13. Auparavant, classiquement, ce panneau de porte 11 s'étendait jusqu'au voisinage de la vitre 14, approximativement selon le même profil que la partie correspondante 15 du boîtier du store.

L'espace dégagé 13 permet d'introduire le boîtier 17 du store à l'intérieur de la portière, sans difficulté. Ce boîtier prend appui d'une part sur l'extrémité 12 du panneau intérieur 11, et d'autre part sur une feuillure intérieure 18. La solidarisation à cette feuillure 18 peut se faire de plusieurs manières. Une technique avantageuse, décrite plus en détail par la suite, repose sur l'utilisation d'un joint lécheur 19 configuré à cet effet

Il est à noter que la mise en place du boîtier 17 est directe, dès lors que la partie supérieure du panneau intérieur 11 à été supprimée, sans aucune autre adaptation. Il suffit simplement que la feuillure 18 soit formée, à l'origine, de façon à ménager un espace suffisant pour permettre l'introduction du boîtier 17.

Une fois en place, la majeure partie du boîtier 17 n'est plus visible. Seules demeurent apparentes l'extrémité de fixation 110 qui vient chevaucher l'extrémité 12 du panneau intérieur 11, et la portion 15 correspondant à la partie supérieure du panneau 11, qui a été supprimée. Cette portion 15 présente avantageusement un aspect identique, ou similaire, à celui de la partie supérieure du panneau de porte, pour des raisons évidentes d'esthétique. Par exemple, il peut être recouvert d'un tissu collé 111, de façon à présenter le même aspect que le reste du panneau.

Le boîtier 17 en lui-même est par exemple réalisé dans un matériau plastique, ou dans un métal adapté.

Avantageusement, il est conçu en deux parties indépendantes, un élément de base 17₁ et un couvercle 17₂, qui se solidarisent par une simple articulation étanche à l'air 112. On a représenté en pointillés le couvercle 17₂ avant montage, et en trait plein le même couvercle 17₂ une fois monté. Cette conception en deux parties permet un assemblage et un montage particulièrement aisés. L'articulation 112 étant conçue de façon à être étanche, il apparaît clairement que la poussière ne peut pas pénétrer à l'intérieur de la portière.

Le store en lui-même est classique. Il s'agit, dans le mode de réalisation illustré, d'une store à enrouleur comprenant un rideau 113 rétractable, monté sur un rouleau 114, lui même monté dans le boîtier 17.

La portion 15 présente un axe de rivetage 115, auquel est solidarisé une clef 116, avec un rivetage par exemple tous les 30 mm.

Cette clef 116 coopère avec une première agrafe 19₁ du joint lécheur 19, qui se prolonge par une seconde agrafe 19₂, inversée par rapport à la première agrafe 19₁, et qui vient chevaucher l'extrémité de la feuillure 18. Cette double agrafe 19₁, 19₂ permet de solidariser de façon efficace le boîtier 17 et la feuillure 18. Outre les avantages déjà décrits, cela permet d'augmenter la rigidité de la portière.

Le joint lécheur 19 comporte par ailleurs, classiquement, deux éléments lécheurs 19₃ et 19₄, venant en contact avec la vitre 14. Ils assurent simultanément une fonction d'étanchéité et de nettoyage, lorsque la vitre 14 coulisse.

Selon différents modes de réalisation, le joint lécheur peut être solidaire du store, ou préalablement monté sur la feuillure. Dans ce dernier cas, le store vient s'indexer sur le joint lécheur, lors du montage.

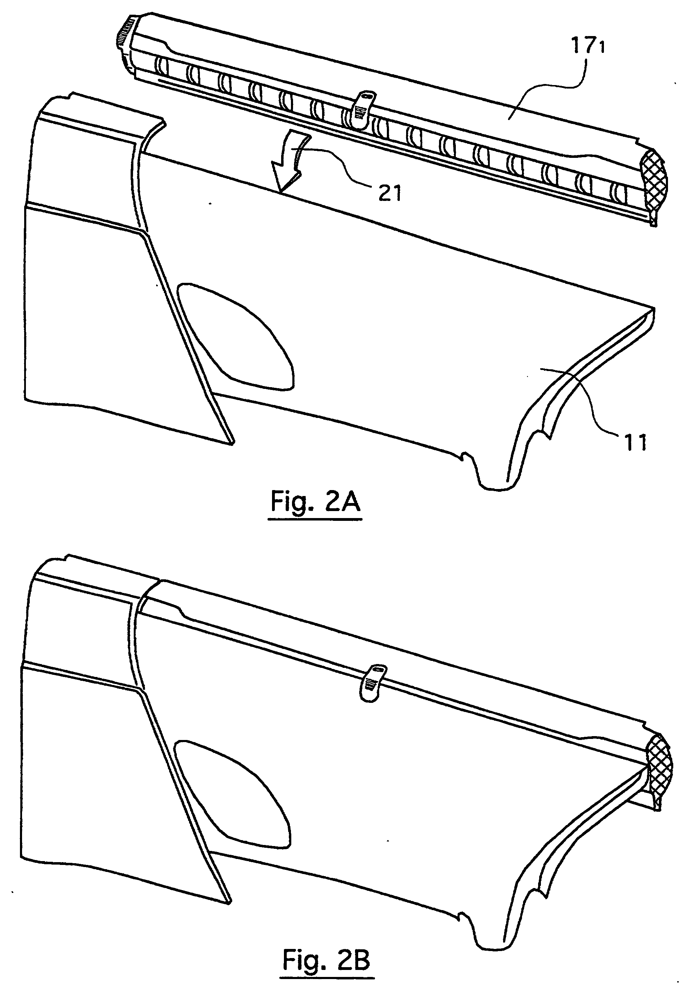

Comme cela apparaît encore plus clairement sur les figures 2A et 2B, le montage du store de l'invention est particulièrement aisé. Après avoir effectué la découpe de la partie supérieure du panneau de la portière, on met en place le couvercle 17₂ sur la partie restante du panneau intérieur 11, puis l'on rapporte le module correspondant à la base 17₁ du boîtier sur le couvercle flèche 21, par simple encliquetage de l'articulation 112. Il suffit alors de mettre en place le joint lécheur (19) sur la feuillure (18).

On obtient alors l'aspect illustré par la figure 2B. Il apparaît clairement que l'esthétique est grandement améliorée, par rapport aux techniques connues, bien que le store ait été rapporté après fabrication du véhicule. Il paraît, en effet, complètement et parfaitement intégré au panneau de porte.

Selon une autre approche, les éléments 17₁ et 17₂ peuvent être assemblés préalablement au montage sur le véhicule. Dans ce cas, il est possible de livrer au constructeur du véhicule un store assemblé, qu'il n'a plus qu'à fixer, par exemple par collage) sur le panneau préalablement préparé.

La technique de l'invention offre donc une très grande flexibilité, permettant de distribuer le store comme une option. Le montage est très simple, tout en respectant l'intégrité visuelle du panneau d'origine. Notamment, il ne provoque pas l'aspect "boîte à lettres" que l'on retrouve habituellement dans ce type d'application.

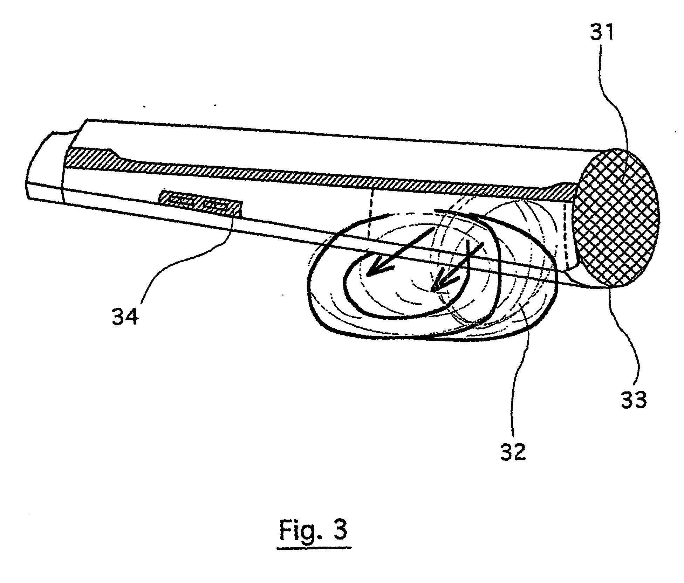

On notera par ailleurs que le store, selon l'invention, peut intégrer facilement divers équipements optionnels, tels que ceux illustrés, à titre d'exemples, en figure 3.

Sur cette figure 3, le module 31 équipé du store, selon l'invention, comprend, par ailleurs, un coussin de sécurité (classiquement appelé "air-bag") latéral 32, illustré en cours de gonflage. Pour permettre le développement de ce coussin gonflable 32 en cas de choc, le revêtement comprend par exemple le tissu déchirable pré-découpé 33.

Le module 31 peut également porter des commandes électriques 34, permettant le contrôle de la vitre coulissante, ou d'une option quelconque (chauffage, climatisation, inclinaison des sièges,...).

L'invention ne se limite bien sûr pas au mode de réalisation qui vient d'être décrit. Notamment, le boîtier peut être réalisé en une seule pièce, sa fixation peut se faire d'une façon différente (par exemple indépendamment du joint lécheur).

Le store n'est pas forcément un store à enrouleur. Différentes autres techniques connues peuvent être mises en oeuvre de façon similaire.

Par ailleurs, la suppression de la partie supérieure de la portière ne se fait pas obligatoirement par découpage. Notamment, elle peut être prévue dès l'origine de la construction du véhicule. Dans ce cas, cette partie supérieure peut être un élément indépendant du panneau intérieur, aisément désolidarisable de ce dernier.

Enfin, et comme déjà indiqué en préambule, la technique décrite n'est pas exclusivement limitée à une portière de véhicule en tant que telle. Au contraire, la même approche peut être appliquée pour la plupart des baies d'un véhicule, dès lors que la configuration est comparable à celle de la partie supérieure d'un panneau de portière.

## Revendications

1. Store destiné à occulter une baie ménagée dans un élément de carrosserie d'un véhicule, du type présentant un boîtier (17) dans lequel est monté un rideau rétractable (113),
ledit boîtier (17) étant conçu de façon qu'il présente des éléments extérieurs (110, 15) visibles prévus pour venir en lieu et place d'une partie supérieure du panneau intérieur (11) dudit élément de carrosserie, ladite partie supérieure ayant été préalablement supprimée, **caractérisé en ce qu'**il comprend des premiers moyens (110) de fixation à l'extrémité découpée (12) dudit panneau intérieur, et des seconds moyens (19) de fixation à l'extrémité supérieure d'une feuillure (18) interne audit panneau.

2. Store selon la revendication 1, **caractérisé en ce que** lesdits premiers moyens (110) de fixation sont formés par un prolongement dudit boîtier (17), venant chevaucher ladite extrémité découpée (12).

3. Store selon l'une des revendications 1 et 2, **caractérisé en ce que** lesdits éléments extérieurs visibles (110, 15) sont au moins partiellement revêtus d'un revêtement harmonisé avec ledit panneau intérieur (11) et/ou l'intérieur dudit véhicule.

4. Store selon l'une quelconque des revendications 1 à 3, **caractérisé en ce qu'**il porte un joint lécheur (19), dont au moins une extrémité de léchage (19₃, 19₄) est en contact avec une vitre coulissante (14).

5. Store selon la revendication 4, **caractérisé en ce que** ledit joint lécheur (19) forme lesdits seconds moyens de fixation.

6. Store selon la revendication 5 **caractérisé en ce que** ledit joint lécheur (19) comprend une première agrafe (19₁) coopérant avec une clé (116) de maintien solidaire dudit boîtier et une seconde agrafe (19₂) formant lesdits seconds moyens de fixation.

7. Store selon l'une quelconque des revendications 1 à 3, **caractérisé en ce qu'**il comprend des moyens de solidarisation à un joint lécheur préalablement monté sur ledit élément de carrosserie.

8. Store selon l'une quelconque des revendications 1 à 7, **caractérisé en ce que** ledit boîtier (17) est formé de deux parties longitudinales (17₁, 17₂), solidarisées par une articulation (112) prévue à cet effet.

9. Store selon l'une quelconque des revendications 1 à 8, **caractérisé en ce qu'**il porte au moins un des équipements appartenant au groupe suivant :
- commande (34) d'ouverture et de fermeture de la vitre de ladite baie ;
- commande (34) électrique d'un dispositif ou d'un élément optionnel ;
- coussin gonflable de sécurité (32) ("airbag").

10. Store selon l'une quelconque des revendications 1 à 9, **caractérisé en ce que** ledit rideau rétractable (113) est monté sur un rouleau d'enroulement (114).

11. Elément de carrosserie d'un véhicule, comprenant un panneau et une baie, **caractérisé en ce que** la partie supérieure dudit panneau a été supprimée et remplacée par des éléments extérieurs visibles (15, 110) du boîtier (17) d'un store, présentant également un logement pour le rideau rétractable (113) dudit store, prévu pour prendre place à l'intérieur dudit panneau, une fente prévue au niveau desdits éléments extérieurs visibles permettant le passage dudit rideau rétractable (113) ledit boîtier (17) comprenant des premiers moyens (110) de fixation à l'extrémité supérieure découpée (12) dudit panneau intérieur, et des seconds moyens (19) de fixation à l'extrémité supérieure d'une feuillure (18) interne audit panneau.

12. Procédé de mise en place d'un store à rideau rétractable sur un élément de carrosserie d'un véhicule, comprenant un panneau et une baie, **caractérisé en ce qu'**il comprend les étapes suivantes :
- suppression de la partie supérieure dudit panneau ;
- installation dudit store au niveau de ladite partie supérieure supprimée, par montage de premiers moyens (110) de fixation à l'extrémité découpée (12) dudit panneau intérieur, et de seconds moyens (19) de fixation à l'extrémité supérieure d'une feuillure (18) interne audit panneau,
le boîtier (17) dudit store présentant des éléments extérieurs visibles (15, 110) prévus pour venir en lieu et place de ladite partie supérieure supprimée, et un logement pour ledit rideau rétractable (113), prévu pour prendre place à l'intérieur dudit panneau, une fente prévue au niveau desdits éléments extérieurs visibles permettant le passage dudit rideau rétractable (113).

## Claims

1. Blind intended to black out an aperture made in a vehicle bodywork element, of the type having a housing (17) in which a retractable curtain (113) is mounted,
the said housing (17) being designed so that it has visible exterior elements (110, 15) provided to replace an upper part of the interior panel (11) of the said bodywork element, the said upper part having been previously removed,
**characterised in that** it comprises first means (110) for fixing to the cut end (12) of the said interior panel, and second means (19) for fixing to the upper end of a rabbet (18) inside the said panel.

2. Blind according to Claim 1, **characterised in that** the said first fixing means (110) are formed by an extension of the said housing (17), straddling the said cut end (12).

3. Blind according to one of Claims 1 and 2,
**characterised in that** the said visible exterior elements (110, 15) are at least partly covered with a covering matching the said interior panel (11) and/or the interior of the said vehicle.

4. Blind according to any one of Claims 1 to 3,
**characterised in that** it bears a wipe seal (19), at least one wiping end (19₃, 19₄) of which is in contact with a sliding window (14).

5. Blind according to Claim 4, **characterised in that** the said wipe seal (19) forms the said second fixing means.

6. Blind according to Claim 5, **characterised in that** the said wipe seal (19) comprises a first clip (19₁) cooperating with a holding key (116) joined to the said housing, and a second clip (19₂) forming the said second fixing means.

7. Blind according to any one of Claims 1 to 3,
**characterised in that** it comprises means for securing to a wipe seal previously mounted on the said bodywork element.

8. Blind according to any one of Claims 1 to 7,
**characterised in that** the said housing (17) is formed of two longitudinal parts (17₁, 17₂) joined by a joint (112) provided for this purpose.

9. Blind according to any one of Claims 1 to 8,
**characterised in that** it bears at least one of the pieces of equipment belonging to the following group:
- control (34) for opening and closing the window of the said aperture;
- electric control (34) of an optional device or element;
- inflatable safety cushion (32) ("airbag").

10. Blind according to any one of Claims 1 to 9,
**characterised in that** the said retractable curtain (113) is mounted on a winding roller (114).

11. Vehicle bodywork element, comprising a panel and an aperture, **characterised in that** the upper part of the said panel has been removed and replaced by visible exterior elements (15, 110) of the housing (17) of a blind, also having a receptacle for the retractable curtain (113) of the said blind, designed to be accommodated inside the said panel, a slot provided at the level of the said visible exterior elements permitting the passage of the said retractable curtain (113),
the said housing (17) comprising first means (110) for fixing to the cut upper end (12) of the said interior panel, and second means (19) for fixing to the upper end of a rabbet (18) inside the said panel.

12. Method for installing a blind with retractable curtain on a vehicle bodywork element, comprising a panel and an aperture, **characterised in that** it comprises the following steps:
- removal of the upper part of the said panel;
- fitting of the said blind at the level of the said removed upper part, by mounting first means (110) for fixing to the cut end (12) of the said interior panel, and second means (19) for fixing to the upper end of a rabbet (18) inside the said panel,
the said housing (17) of the said blind having visible exterior elements (15, 110) provided to replace the said removed upper part, and a receptacle for the said retractable curtain (113), designed to be accommodated inside the said panel, a slot provided at the level of the visible exterior elements permitting the passage of the said retractable curtain (113).

## Patentansprüche

1. Rollo zum Verdecken einer in einem Karosserieelement eines Fahrzeugs praktizierten Öffnung, das ein Gehäuse (17) aufweist, in dem ein zurückziehbarer Vorhang (113) angebracht ist,
wobei das Gehäuse (17) derart konstruiert ist, das es sichtbare Außenelemente (110, 15) aufweist, die an Ort und Stelle eines oberen Teils des inneren Paneels (11) des erwähnten Karosserieelementes treten sollen, wobei dieser obere Teil vorher ausgeschnitten wurde,
**dadurch gekennzeichnet, dass** es erste Befestigungsmittel (110) an dem ausgeschnittenen Ende (12) des inneren Paneels sowie zweite Befestigungsmittel (19) an dem oberen Ende eines inneren Anschlagfalzes (18) dieses Paneels aufweist.

2. Rollo nach Anspruch 1, **dadurch gekennzeichnet, dass** die ersten Befestigungsmittel (110) von einer Verlängerung des Gehäuses (17) gebildet werden, die auf dem ausgeschnittenen Ende (12) aufliegt.

3. Rollo nach einem der Ansprüche 1 oder 2, **dadurch gekennzeichnet, dass** die äußeren sichtbaren Elemente (110, 15) mindestens teilweise eine Verkleidung aufweisen, die mit dem inneren Paneel (11) und/oder dem Inneren des Fahrzeugs harmonisiert.

4. Rollo nach einem der Ansprüche 1 bis 3, **dadurch gekennzeichnet, dass** es eine abstreifende Dichtung (19) aufweist, von der mindestens ein abstreifendes Ende (19₃, 19₄) eine verschiebbare Glasscheibe (14) abstreift.

5. Rollo nach Anspruch 4, **dadurch gekennzeichnet, dass** die abstreifende Dichtung (19) die zweiten Befestigungsmittel bildet.

6. Rollo nach Anspruch 5, **dadurch gekennzeichnet, dass** die abstreifende Dichtung (19) einen ersten Haken (19₁), der mit einem Halteschlüssel (116) zusammenwirkt, der als Teil des Gehäuses ausgebildet ist, sowie einen zweiten Haken (19₂) aufweist, der die zweiten Befestigungsmittel bildet.

7. Rollo nach einem der Ansprüche 1 bis 3, **dadurch gekennzeichnet, dass** es über Verbindungsmittel zu einer abstreifenden Dichtung verfügt, die vorher an das Karosserieelement befestigt wurde.

8. Rollo nach einem der Ansprüche 1 bis 7, **dadurch gekennzeichnet, dass** das Gehäuse (17) aus zwei Längsteilen (17₁, 17₂) gebildet wird, die über ein eigens dafür eingesetztes Gelenk (112) verbunden sind.

9. Rollo nach einem der Ansprüche 1 bis 8, **dadurch gekennzeichnet, dass** es mindestens einen Ausrüstungsgegenstand aus der folgenden Gruppe trägt:
- Steuerung (34) für das Öffnen und Schließen der Glasscheibe der Öffnung;
- elektrischer Steuerschalter (34) einer optionalen Vorrichtung oder eines optionalen Elementes;
- aufblasbares Sicherheitskissen (32) ("Airbag").

10. Rollo nach einem der Ansprüche 1 bis 9, **dadurch gekennzeichnet, dass** der einziehbare Vorhang (113) auf eine Aufrollwalze (114) montiert ist.

11. Ein Paneel und eine Öffnung aufweisendes Karosserieelement eines Fahrzeuges, **dadurch gekennzeichnet, dass** das obere Teil der Paneels weg geschnitten und durch äußere sichtbare Elemente (15, 110) des Gehäuses (17) eines Rollos ersetzt wurde, das ebenfalls eine Aussparung für den einziehbaren Vorhang (113) des Rollos aufweist, das im Inneren des Paneels eingesetzt werden soll, wobei ein auf der Höhe der äußeren sichtbaren Elemente vorgesehener Schlitz den Durchgang des einziehbaren Vorhangs (113) ermöglicht und wobei das Gehäuse (17) erste Befestigungsmittel (110) an dem oberen ausgeschnittenen Ende (12) des inneren Paneels sowie zweite Befestigungsmittel (19) an dem oberen Ende eines inneren Anschlagfalzes (18) dieses Paneels aufweist.

12. Verfahren zum Einsetzen eines Rollos mit einziehbarem Vorhang an ein Karosserieelement eines Fahrzeuges, welches ein Paneel und eine Öffnung aufweist, **dadurch gekennzeichnet, dass** es die folgenden Schritte umfasst:
- Entfemen des oberen Teils des Paneels;
- Anbringen des Rollos auf der Höhe des entfernten Oberteils, durch Montage erster Befestigungsmittel (110) an dem ausgeschnittenen Ende (12) des inneren Paneels sowie zweiter Befestigungsmittel (19) an dem oberen Ende eines inneren Anschlagfalzes (18) des Paneels,
wobei das Rollogehäuse (17) äußere sichtbare Elemente (15, 110) aufweist, die an Ort und Stel le des ausgeschnittenen Oberteils treten sollen, sowie eine Aussparung für den einziehbaren Vorhang (113), der im Inneren des Paneels Platz finden soll, wobei ein auf der Höhe der äußeren sichtbaren Elemente vorgesehener Schlitz den Durchgang des einziehbaren Vorhangs (113) ermöglicht.
